Europäisches Patentamt

(19)    European Patent Office

Office européen des brevets

(11)    EP 0 704 414 A1

(12)    **EUROPEAN PATENT APPLICATION**

(43) Date of publication:
03.04.1996 Bulletin 1996/14

(51) Int. Cl.$^6$: **C04B 35/80**, C04B 35/622,
C04B 38/00

(21) Application number: 94115010.4

(22) Date of filing: 23.09.1994

(84) Designated Contracting States:
DE GB

(71) Applicant: MITSUBISHI KASEI CORPORATION
Tokyo 100 (JP)

(72) Inventors:
• Yaguchi, Masachika
Ebina-shi, Kanagawa-ken (JP)
• Yamaguchi, Takashi
Nakakubiki-gun, Niigata-ken (JP)

• Shiraga, Ken
Yokkaichi-shi, Mie-ken (JP)
• Awata, Mitsuru
Kodaira-shi, Tokyo (JP)

(74) Representative: Hansen, Bernd, Dr. Dipl.-Chem. et al
Hoffmann, Eitle & Partner,
Patentanwälte,
Arabellastrasse 4
D-81925 München (DE)

(54) **Alumina fiber granules, process for producing the granules and a process for producing a porous article using the granules**

(57)    Granules comprising alumina fibers arranged substantially at random, which have a particle size of from 30 to 500 µm and a bulk density of from 0.5 to 1.0 g/cm$^3$; a process for producing the granules; and a process for producing a porous article which comprises press molding the granules, densifying under pressure and then calcining.

EP 0 704 414 A1

## Description

The present invention relates to alumina fiber granules, a process for producing the granules and a process for producing a porous article using the granules.

It has widely been attempted to produce a porous article by using pulverized alumina fibers having a length of from several tens to several thousands micron-meters. A water-filtration molding method is exclusively employed for the molding method (for example, Japanese Patent Publication (KOKOKU) No. 4-28772 (1992)). In this method, pulverized alumina fibers are suspended in water to form a slurry, and the slurry is poured into a molding die having a plurality of apertures. Water is discharged through the apertures formed in the die, and an alumina fiber layer of a predetermined thickness is formed on the die. Then, the layer is released from the die, dried and then calcined to obtain a desired porous alumina fiber article. Usually, in addition to the alumina fibers, inorganic particles such as those of alumina or silica are added to the slurry, so as to obtain desired bulk density and chemical composition of the finally obtained article. Further, an inorganic binder such as silica sol or alumina sol is also added. The inorganic binder among the alumina fibers strengthens the bonding therebetween upon molding. Depending on the case, the binder also serves as a calcining aid for sintering the alumina fibers to each other upon sintering. Further, an organic binder, for example, polyvinyl alcohol is also added for facilitating molding and for easy handling of the article before calcining.

One of the problem in the water-filtration molding method is a low productivity. Namely, it requires a certain period of time to pour the slurry into the molding die and to form an alumina fiber layer of a desired thickness on the die. Further, it also retires a certain period of time to adjust the bulk density of the thus formed article by pressing, if necessary, and to dry subsequently.

Further, since fibers are oriented in parallel on a filtration surface upon water-filtration molding, there is also a problem that the finally obtained porous alumina fiber article has considerable anisotropy.

It is, accordingly, demanded to provide a process for producing a porous alumina fiber article at a high productivity and with less anisotropy in the resultant article.

As a result of an earnest study for overcoming the foregoing problems, the present inventors have found that an alumina fiber article which is porous and has less anisotropy can be produced at a high efficiency by granulating alumina fibers at first and then producing an article by using the granules instead of producing the article directly from the alumina fibers as in the prior art method. The present invention has been accomplished based on the above finding.

An object of the present invention is to provide a process for producing a porous alumina fiber article at a high productivity. Another object of the present invention is to provide a process for producing a porous alumina fiber articles having less anisotropy.

To achieve the aims, in a first aspect of the present invention, there is provided granules comprising alumina fibers arranged substantially at random, which have a particle size of from 30 to 500 μm and a bulk density of from 0.5 to 1.0 g/cm$^3$.

In a second aspect of the present invention, there, is provided a process for producing preferred granules, which comprises spray-drying an aqueous slurry comprising alumina fibers, inorganic particles in an amount of 1 to 2 times by weight that of the alumina fibers and an inorganic binder in an amount of 1 to 20% by weight based on incombustible components in the granules.

In a third aspect of the present invention, there is provided a process for producing a porous article, which comprises press-molding the granules as defined above, and then calcining.

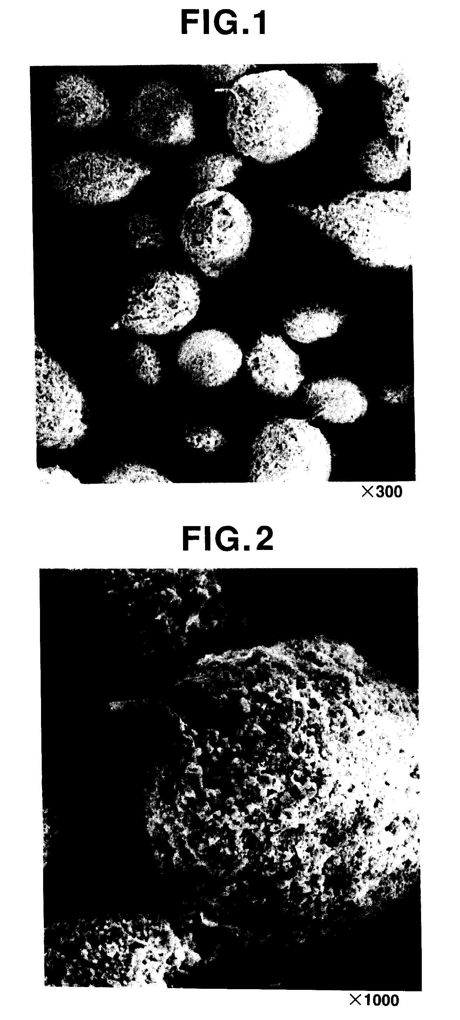

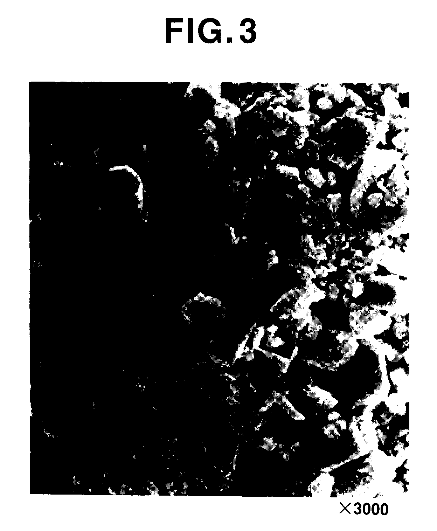

Figs. 1, 2 and 3 each show an appearance of granules obtained in Example 1, and are a scanning electron microscopic photograph of the surface structure of particles.

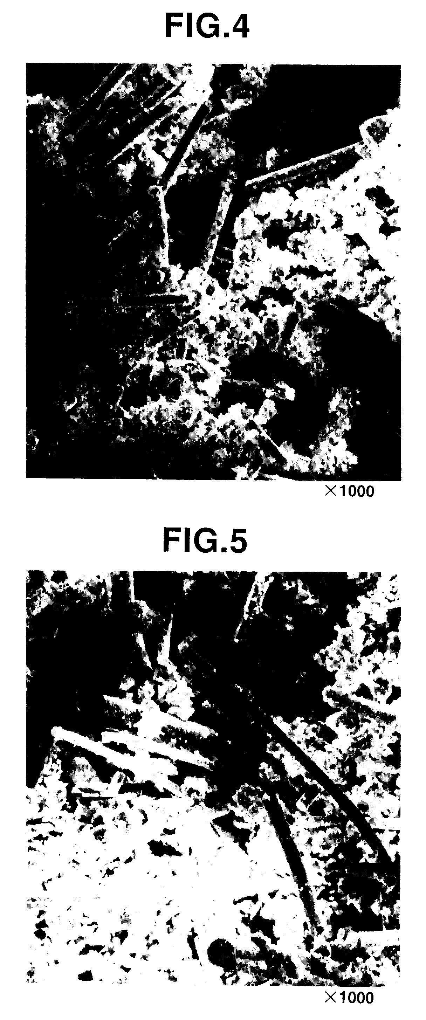

Figs. 4 and 5 each show a rupture cross-section of granules obtained in Example 1, and are a scanning electron microscopic photograph of the inner structure of particles.

As alumina fibers, those employed conventionally for the production of articles can be used. A diameter of the alumina fibers is usually from 1 to 30 μm, preferably from 1 to 10 μm. By using alumina fibers of smaller diameter, granules can be generally produced made easily and properties of the finally obtained article are generally excellent. However, since it is difficult to produce alumina fibers of an extremely small diameter, it is practically most preferable to use alumina fibers having a diameter of from 2 to 5 μm. The length of the alumina fibers is usually from 30 to 5000 μm, which is selected properly depending on the diameter of the fibers and the size of the granules to be produced.

The length of the alumina fibers is usually not less than 5 times, preferably riot less than 10 times and, more preferably not less than 20 times the diameter. It is difficult to obtain an excellent article by using alumina fibers at small length/diameter ratio. On the other hand, if the fiber length is too long, it is difficult to form granules, so that fibers having a fiber length not greater than twice of the diameter of the granule to be produced are preferably used. It is more preferred to use such fibers that 50% by weight of the fibers has a length less than the diameter of the granules and the remaining 50% by weight portion of fibers has a length substantially not greater than twice of the diameter of the granules.

Various compositions of alumina fibers have been known and a composition with an alumina ($Al_2O_3$) content of not less than 70% by weight is usually used. For instance, there can be mentioned alumina fibers containing a small amount of silica, for example, a mullite composition of 72 wt% alumina and 28 wt% silica ($SiO_2$) and a composition of 95 wt% alumina and 5 wt% silica.

Granules of the alumina fibers are formed from the alumina fibers as described above and additives used together as required, for example, inorganic particles, a binder and, further, organic particles as described later. The particle size of the granules is usually from 30 to 5000 $\mu$m. However, as the particle size of the granules is increased, it becomes difficult to form the granules by a spray-drying method and it is also difficult to dry the formed granules. Accordingly, the particle size of the granules is preferably from 30 to 300 $\mu$m and, more preferably from 50 to 200 $\mu$m. The bulk density of the granules is from 0.5 to 1.0 $g/cm^3$ and, preferably from 0.7 to 1.0 $g/cm^3$.

The alumina fibers can be granulated by suspending alumina fibers and additives into water to form a slurry and spray-drying the slurry. Further, in a case of granules of large particle size, a method of adding water to the alumina fibers and the additives and granulating them under rolling.

When granules obtained by the spray-drying method are observed by an electron microscope, alumina fibers are arranged substantially at random in a granule, that is, with no particular orientation. Further, the other ingredients are uniformly dispersed. It is considered that this contributes to reduced anisotropy of the porous alumina fiber article produced by using the granules.

Upon production of the granules, it is possible to add, for example, inorganic particles, organic and inorganic binders and organic particles which have been used conventionally in combination with the alumina fibers upon production of the porous alumina fiber article. That is, it is preferred to produce a porous alumina fiber article by incorporating ingredients added to the alumina fibers conventionally upon molding and using only the granules or with addition of some aids thereto.

Inorganic particles to be added to the alumina fibers upon production of the granules, alumina-based granules, for example, alumina or mullite are preferably used. In addition, various kinds of other heat resistant inorganic particles such as ferrite, silica, magnesia, zirconia, titania, vanadium oxide, zinc oxide, cordierite, steatite, barium titanate, magnesium chromate, tungsten carbide, titanium carbide, silicon carbide, tantalum carbide, niobium carbide, clay and kaolinite may also be used. The addition of such inorganic particles gives an effect of promoting the formation or the granules. The inorganic particles are preferably added by not more than 2 times by weight, preferably 1 to 2 times by weight that of the alumina fibers. Inorganic particles of small particle size are preferred and, usually, inorganic particles having a diameter about not greater than twice, preferably 1/10 to 1 times the diameter of the alumina fibers are used.

As the inorganic binder, silica sol or alumina sol is used for instance. The inorganic binder contributes to the formation of the granules, as well as serves as the sintering aid for binding each of the alumina fibers upon calcining. Accordingly, if the content of the inorganic binder is insufficient, formation of the granules may become difficult, and the strength of the porous alumina fiber article produced from the granules may be decreased. The amount of the inorganic binder as solid content is preferably not more than 20% by weight, preferably from 1 to 20% by weight based on incombustible components in the granules (that is, alumina fibers, inorganic particles, an inorganic binder, etc.)

As the organic binder, water soluble or water dispersible polymeric compounds such as dextrin, methyl cellulose, polyvinyl alcohol, gum arabic, polyethylene oxide and polyacrylic acid can be used. The organic binder is added in order to promote the formation of the granules and the binder itself is eliminated by burning or decomposition upon calcining of the article. The organic binder is added usually in an amount of not more than 30% by weight, preferably from 0.1 to 10% by weight based on incombustible components in the granules.

Further, organic particles such as carbon black or cellulose powder may also be incorporated into the granules. Since the organic particles are eliminated by burning or decomposition upon calcining of the molding produced from the granules, granules containing the organic particles are used for the production of a porous alumina fiber article with low bulk density. The amount of the organic particles in the granules is determined depending on a desired bulk density of the porous alumina fiber article to be produced. It is usually in an amount of not more than 50% by weight, preferably from 3 to 20% by weight based on incombustible components in the granules.

In the production by spray-drying, it is important to previously homogenize an aqueous slurry of the alumina fibers and additives such as inorganic particles, inorganic binder, an organic binder and an organic particles, for example, by a ball mill. The solid content of the slurry is appropriately from 20 to 60% by weight. The viscosity of the slurry is preferably from several to several tens poises, more preferably from 3 to 20 poises. If the viscosity is too low, it may cause a disadvantage that the slurry precipitates in pipelines during transportation. In addition, a slurry having an adequately higher viscosity tends to form spherical-like and dense granules. The spray-drying is usually conducted at 100 to 300°C.

Since the alumina fiber granules according to the present invention are flowable and can be handled like that a powdery, an article can be produced with ease by using the granules in accordance with a usual pressure molding process for powder. Usually, a predetermined amount of the granules are charged into a molding female die and pressed by a male die usually at a pressure from 5 to 2000 $kg/cm^2$ into a desired configuration. If desired, it can further be densified by pressing at a pressure usually from 0.5 to 2 $ton/cm^2$ using an isostatic pressure press such as a rubber press. The densification can improve mechanical strength of the resultant article. Further, it can also be molded by an isostatic pressure press from the first. While it is preferred to mold using only the granules, other ingredients such as organic particles may be used together if required.

Upon molding granules, a molding pressure is selected such that the porous alumina fiber article obtained finally has a desired bulk density. The bulk density of the porous alumina fiber article is usually from 0.5 to 2.0 g/cm². If the desired bulk density is lower than 1.0 g/cm², it is generally difficult to attain it only by controlling the molding pressure and use of granules containing organic particles is preferable. A preferred bulk density of the porous alumina fiber article is generally from 0.9 to 1.6 g/cm³ for a metal impregnation substrate (preform) and from 1.3 to 2.0 g/cm³ for ceramic calcining setting substrate (setter). Such a range of bulk density can be attained by the control for the content of the inorganic particles in the granules and the molding pressure. The article obtained by molding the granules is calcined to remove the water content and the combustible component and to stabilize the dimension. Calcining can be conducted by a usual method and usually it may be calcined at a temperature of about from 1000°C to 1500°C for 0.5 to 8 hours.

According to the present invention, the porous alumina fiber article can be produced efficiently by granulating alumina fibers and press molding the granules as the raw material.

EXAMPLES

The present invention will be explained more specifically with reference to examples, but it should be noted that the invention is not restricted to the following examples unless the scope thereof is exceeded.

The particle size and the bulk density of the granules are measured as below.

Particle size of granule: Granules are microscopically photographed, and a major axis diameter and a minor axis diameter in perpendicular the major axis diameter direction are measured to determine the particle size as an arithmetic average thereof. Upon measurement, the outer profile of the granules is determined with neglecting fibers protruding from the granules.

Bulk density of granule: Dried granules are poured into a 25 ml measuring cylinder and the weight (w g) is measured.

$$\text{Bulk density} = w/25 \ (\text{g/cm}^3)$$

Materials used in the examples are as follows: Alumina fibers: Composition of 95 wt% alumina and 5 wt% silica, average fiber diameter of 3 μm and fiber length (median) of 70 μm.

Mullite powder : Manufactured by Taiheiyo Random Co., particle size (median) of 2.2 μm.

Silica sol : Manufactured by Shokubai Kasei Industry Co., Catalloid S-20L, solid content of 20%. Alumina sol : Manufactured by Nissan Chemical Industry Co., AS200, solid content of 11%.

Alumina powder : Products manufactured by Alcoa Kasei Ltd., particle size (median) of 0.45 μm.

Polyethylene oxide : Manufactured by Meisei Chemical Industry Co., Alcox E-130.

<u>Example 1</u>

| Production of granules | |
|---|---|
| Alumina fibers | 3.1 parts by weight |
| Mullite powder | 5.5 parts by weight |
| Silica sol | 1.2 parts by weight |
| Polyethylene oxide | 0.009 parts by weight |
| Water | 11.7 parts by weight |

The above-mentioned materials were mixed and sufficiently dispersed by a ball mill. When pH was adjusted to 6 with nitric acid, the viscosity of the slurry was about 9 poise. The slurry was spray-dried by a spray drier. The resultant granules had a particle size of 70 to 100 μm and a bulk density of 0.85 g/cm³.

Example 2

| Production of granules | |
|---|---|
| Alumina fibers | 100 parts by weight |
| Alumina powder | 130 parts by weight |
| Silica sol | 10 parts by weight |
| Alumina sol | 61 parts by weight |
| Aluminum sulfate* | 16 parts by weight (20% aqueous solution) |
| Water | 258 parts by weight |

(* gelling agent for silica sol)

The above-mentioned materials were mixed and sufficiently dispersed by a ball mill. The slurry was spray-dried to produce granules in the same manner as in Example 1.

Example 3

Production of porous alumina fiber article

Three (3) g of granules obtained in Example 1 were charged into a cylindrical molding die of 20 mm in diameter and then press-molded by a press at 160 kg/cm$^2$. The molded article was pressed by a rubber press at 1.0 ton/cm$^2$. The pressed article was placed in a firing furnace, heated to 1200°C at a temperature elevation rate of 4°C/min, maintained at that temperature for three hours and then allowed to cool. The resultant porous alumina fiber article had a bulk density of 1.83 g/cm$^3$ and a compression strength of 789 kg/cm$^2$. Further, a porous alumina fiber article obtained in the same manner as described above except for increasing the pressure of the rubber press to 2.0 ton/cm$^2$ had a bulk density of 1.93 g/cm$^3$ and a compression strength of 938 kg/cm$^2$.

Example 4

Production of porous alumina fiber article

Thirty (30) g of granules obtained in Example 2 were charged into a die of 50 × 65 × 20 mm and pressed by a press at 60 kg/cm$^2$. The molded article was placed in a firing furnace, heated to 1500°C at a temperature elevation rate of 4°C/min, maintained at that temperature for 8 hours and then allowed to cool. The resultant porous alumina fiber article had a bulk density of 1.62 g/cm$^3$. Further, a porous alumina fiber article obtained in the same manner as described above excepting for pressing by a press at 130 kg/cm$^3$ had a bulk density of 1.89 g/cm$^3$.

**Claims**

1.  Granules comprising alumina fibers arranged substantially at random, which have a particle size of from 30 to 5000 μm and a bulk density of from 0.5 to 1.0 g/cm$^3$.

2.  Granules according to claim 1, wherein the particle size is from 30 to 300 μm.

3.  Granules according to claim 1 or 2, further comprising inorganic particles.

4.  Granules according to any one of claims 1 to 3, an amount or the inorganic paricles is 1 to 2 times by weight that of the alumina fibers.

5.  Granules according to any one of claims 1 to 4, further comprising organic particles.

6.  Granules according to any one of claims 1 to 5, further comprising an inorganic binder.

7. Granules according to any one of claims 1 to 6, further comprising an organic binder.

8. Granules comprising alumina fibers arranged substantially at random, the alumina fibers having a diameter of from 2 to 5 $\mu$m, inorganic particles and an inorganic binder, the granule having a particle size of from 50 to 200 $\mu$m and a bulk density of from 0.7 to 1.0 g/cm$^3$.

9. A process for producing the granules as defined in claim 6, which comprises spray-drying an aqueous slurry comprising alumina fibers, inorganic particles in an amount of 1 to 2 times by weight that of the alumina fibers and an inorganic binder in an amount of 1 to 20% by weight based on incombustible components in the granules.

10. A process for producing a porous article, which comprises press-molding the granules as defined in any one of claims 1 to 8, and then calcining.

11. A process for producing a porous article, which comprises press-molding the granules as defined in any one of claims 1 to 8, densifying by isostatically pressurizing, and then calcining.

12. A porous article having a bulk density of from 0.5 to 2.0 g/cm$^3$, which is obtained by the process as defined in claim 9 or 10.

# FIG.1

×300

# FIG.2

×1000

# FIG. 3

×3000

# FIG.4

×1000

# FIG.5

×1000

European Patent
Office

**EUROPEAN SEARCH REPORT**

Application Number

EP 94 11 5010

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 13, no. 290 (C-614) 5 July 1989 & JP-A-01 085 135 (HAYASHIBARA BIOCHEM.) 30 March 1989 * abstract * | 1 | C04B35/80 C04B35/622 C04B38/00 |
| A | | 2,9 | |
| Y | | 2-4 | |
| Y | EP-A-0 579 587 (SANDVIK AKTIEBOLAG) * page 3, line 3 - line 33; claims 1,9; examples * | 2-4 | |
| A | * the whole document * | 9-12 | |
| A | PATENT ABSTRACTS OF JAPAN vol. 13, no. 556 (C-664) 11 December 1989 & JP-A-01 230 484 (NIPPON STEEL CORP.) 13 September 1989 * abstract * | 1-4,9-12 | |
| A | EP-A-0 363 911 (NICHIAS CORP.) * the whole document * | 1-4,9-12 | TECHNICAL FIELDS SEARCHED (Int.Cl.6) |
| A | EP-A-0 511 661 (MITSUI MINING CO.) * the whole document * | 10-12 | C04B |

The present search report has been drawn up for all claims

| Place of search | Date of completion of the search | Examiner |
|---|---|---|
| THE HAGUE | 27 February 1995 | Harbron, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)